# EUROPEAN PATENT APPLICATION

(11) **EP 2 988 267 A1**
(43) Date of publication of application: **24.02.2016**
(21) Application number: 14753895.3
(22) Date of filing: 02.01.2014
(51) Int. Cl.: G06Q 50/20, G06K 17/00, B42D 1/00

(54) **LEARNING DEVICE USING NFC AND LEARNING SYSTEM USING SAME**

(30) Priority: 20.02.2013 KR 20130017823; 23.09.2013 KR 20130112357
(71) Applicant: Kim, Seong Su, Seoul 150-780 (KR)
(72) Inventor: Kim, Seong Su, Seoul 150-780 (KR)
(74) Representative: Conti, Marco
(86) International application number: PCT/KR2014/000019
(87) International publication number: WO 2014/129740

(57) **Abstract**

The present invention provides a learning wall chart using NFC which is used as a learning tool, including: a content display unit in which a plurality of learning content for learning is arranged on a front surface; and a tag array unit in which a plurality of first near field communication (NFC) tags arranged on a rear surface of the content display unit is provided so as to correspond to the learning contents and which stores information corresponding to the learning contents corresponding to the first NFC tag, in which when a terminal having an NFC communication unit, which performs NFC with the first NFC tag, approaches a learning content and a first NFC tag corresponding to the approached learning content is read, information of the first NFC tag is output through an output unit of the terminal, and a learning system using the same.

According to the present invention, even though there is only a terminal such as a smart phone, it is possible to cause children to instinctively understand letters and a concept thereof, induce the children to study by themselves while being interested therein, and implement an interactive learning system at a cheap price.

## Description

### Technical Field

The present invention relates to a learning wall chart using NFC and a learning system using the same, and more particularly, to a learning wall chart using NFC which uses an NFC communication unit of a terminal such as a smart phone to learn a concept of letters with easiness and fun and a learning system using the same.

### Background Art

Generally, a learning wall chart is a wall poster for children and is a poster type learning tool in which letters, numbers, and images are disposed in one place in order to allow three or four years old children to be familiar to a concept of letters or numbers.

The learning wall chart has been generally utilized such that letters and pictures are arranged and parents pronounce letters and pictures themselves or explain a concept thereof.

As a learning tool of the related art, Korean Patent No. 10-079188 discloses "Studying sheet using drawing cards" in which a plurality of spaces is divided on one sheet and different letters are formed in individual spaces and then a female Velcro is formed on the sheet and a male Velcro is formed on a picture card so that a picture card on which a picture corresponding to the letter is formed is attached/detached onto/from the space through an attachable element. However, according to the learning wall chart of the related art, since the attachable card may easily disappear and the learning is performed under the help of the parents, the learning efficiency is not consistent and increase of the learning efficiency is limited.

Further, as another learning tool of the related art, a language learning tool by which when an electronic pen touches a specific position of a printed matter using an OCR function, a voice file stored therein is reproduced has been utilized. However, the other learning tool of the related art is so expensive that it is difficult to purchase and use the tool.

### Disclosure

### Problem to be Solved by the Invention

In order to solve the problem of the related art as descried above, the present invention has been made in an effort to learn a concept of letters using an NFC communication unit of a terminal such as a smart phone with easiness and fun. Other objects of the present invention will be easily understood through description of exemplary embodiments below.

### Technical Solution

An exemplary embodiment of the present invention provides a learning wall chart using NFC which is used as a learning tool, including: a content display unit in which a plurality of learning contents for learning is arranged; and a tag array unit in which a plurality of first near field communication (NFC) tags arranged on a rear surface of the content display unit is provided so as to correspond to the learning contents and which stores information corresponding to the learning contents corresponding to the first NFC tag, in which when a terminal having an NFC communication unit which performs NFC with the first NFC tag approaches a learning content and a first NFC tag corresponding to the approached learning content is read, information of the first NFC tag is output through an output unit of the terminal.

The content display unit may include a function content which controls output of information through the terminal, the tag array unit may include a second NFC tag which stores control information corresponding to the function content, and when the terminal approaches the function content and the second NFC tag corresponding to the approached function content is read, an output of the terminal may be controlled in accordance with control information of the second NFC tag.

In the content display unit, the learning content may be formed by some of letters, numbers, and images or a combination thereof and the function content may be formed by some of a mathematical sign, an output instruction, and an output type or a combination thereof, and the learning content and the function content may be arranged in a lattice pattern, and in the tag array unit, the first and second NFC tags may be arranged in a lattice pattern.

The learning wall chart may further include an extended content display unit which is detachably attached on a front surface of the content display unit and is provided such that a plurality of extended contents which corresponds to the learning contents to be correlated with the corresponding learning contents to be educationally extended is arranged on a front surface.

Another exemplary embodiment of the present invention provides a learning system using a learning wall chart using NFC,
which includes: a content display unit in which a plurality of learning contents for learning is arranged on a front surface; and a tag array unit in which a plurality of first near field communication (NFC) tags arranged on a rear surface of the content display unit is provided so as to correspond to the learning contents and which stores information corresponding to the learning contents corresponding to the first NFC tag, the learning system including: an NFC communication unit which reads the first NFC tag; a control unit which reads information of the first NFC tag through the NFC communication unit to convert the information or the corresponding information to be required for an output; and an output unit which is controlled by the control unit and outputs information of the first NFC tag or corresponding information by an image or an audio.

When a second NFC tag of the tag array unit which stores control information corresponding to a function content to control an output of the information in the content display unit is read by the NFC communication unit, an output through the output unit may be controlled in accordance with the control information of the second NFC tag.

Further, to solve the above problem, the learning chart may be implemented in the form of a book so as to reduce the size and increase the portability of the learning chart.

A book for use as a learning tool includes: inside pages containing one or more learning contents printed on the same position of each sheet of paper; and an inside front or back page having at least one NFC tag attached thereon in a position corresponding to each inside page. When a terminal having an NFC communication unit for performing NFC with the at least one NFC tag approaches the learning contents of an inside page, an NFC tag corresponding to the approached learning contents is recognized and information of the NFC tag is output through an output unit of the terminal.

Each of the at least one NFC tag corresponds to one inside page.

A learning system includes: a book including inside pages containing one or more learning contents printed on the same position of each sheet of paper, and an inside front or back page having at least one NFC tag attached thereon in a position corresponding to each inside page; and a terminal including an NFC communication unit for performing NFC with the at least one NFC tag, and an output unit, wherein when the terminal approaches the learning contents of an inside page, an NFC tag corresponding to the approached learning contents is recognized and information of the NFC tag is output through the output unit.

### Advantageous Effects

According to the learning wall chart using NFC and the learning system using the same according to the present invention, if there is just a terminal such as a smart phone, it is possible to induce children to instinctively understand and study letters and a concept by themselves while being interested in the letters and the concept and implement an interactive learning system at a cheap price.

### Brief Description of Drawings

FIG. 1 is a perspective view illustrating a learning wall chart using NFC according to an exemplary embodiment of the present invention,
FIG. 2 is an exploded perspective view illustrating a learning wall chart using NFC according to an exemplary embodiment of the present invention,
FIG. 3 is an exploded perspective view illustrating a learning wall chart using NFC according to another exemplary embodiment of the present invention,
FIG. 4 is a diagram illustrating a learning system using a learning wall chart using NFC according to an exemplary embodiment of the present invention, and
FIGS. 5 and 6 are perspective views illustrating an operation of a learning wall chart using NFC according to an exemplary embodiment of the present invention and a learning system using the same.
FIG. 7 is a view illustrating an example of implementing the learning chart in the form of a book, and FIG. 8 is a view illustrating a learning system including the book shown in FIG. 7 and a smart phone.

### Best Mode

Those skilled in the art may make various modifications to the present invention and the present invention may have various embodiments thereof, and thus specific embodiments will be illustrated in the drawings and described in detail. However, it should be understood that the present invention is not limited to the specific exemplary embodiments but includes all changes, equivalents, and alternatives which are included in the technical spirit and the technical scope of the present invention. The present invention may be modified into various different types and the scope of the present invention is not limited to the following exemplary embodiments.

Hereinafter, exemplary embodiments according to the present invention will be described in detail with reference to the accompanying drawings, and the same or corresponding constituent elements are denoted by the same reference numerals regardless of a sign of the drawing, and repeated description thereof will be omitted.

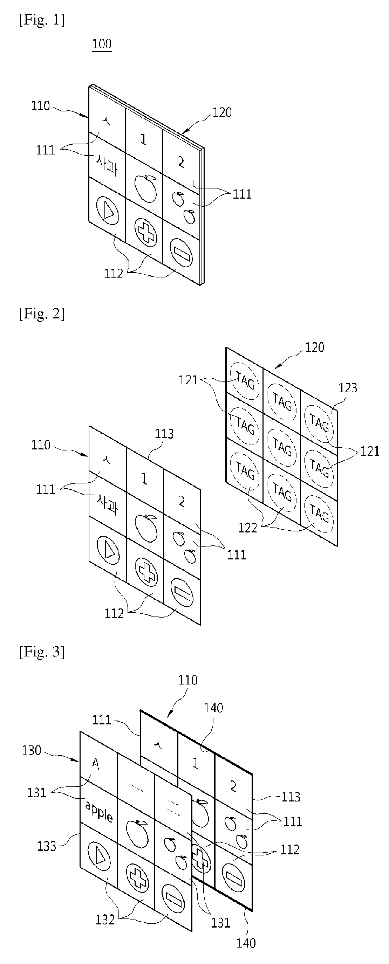

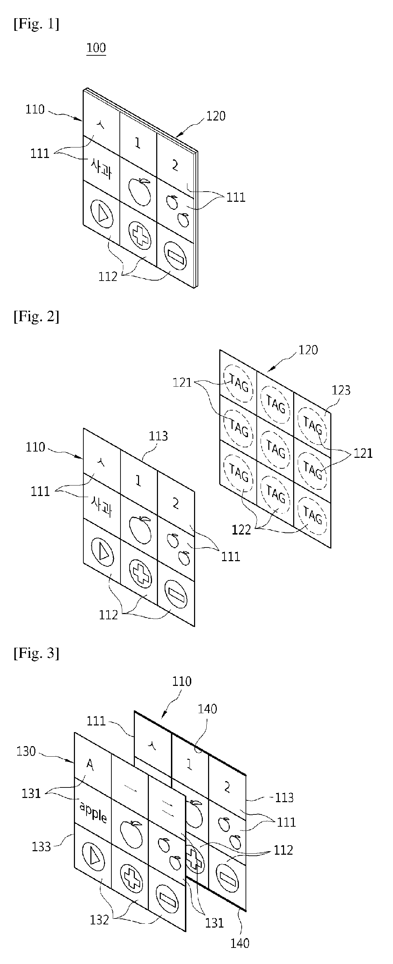

FIG. 1 is a perspective view illustrating a learning wall chart using NFC according to an exemplary embodiment of the present invention and FIG. 2 is an exploded perspective view illustrating a learning wall chart using NFC according to an exemplary embodiment of the present invention.

Referring to FIGS. 1 and 2, a learning wall chart 100 using NFC according to an exemplary embodiment of the present invention is a chart which is used as a learning tool for children and includes a content display unit 110 and a tag array unit 120.

On a front surface of the content display unit 110, a plurality of learning contents 111 for learning is arranged, and for example, the learning contents may be provided on the front surface of a sheet 113 such as a paper, a synthetic resin, or fabric by a printing method or through a sticker attaching method.

The tag array unit 120 is provided such that a plurality of first near field communication (NFC) tags 121,
which is arranged on a rear surface of the content display unit 110, corresponds the learning contents 111 and the NFC 121 stores the information of the corresponding learning contents 111. For example, the tag array unit 120 is attached onto a sheet 123 such as a paper, a synthetic resin, or a fabric as described in the present exemplary embodiment or directly attached onto a rear surface of the sheet 113 of the content display unit 110 or embedded in the sheet 113 of the content display unit 110 to be disposed on the rear surface of the learning contents 111.

The first NFC tag 121 and a second NFC tag 122 which will be described below are a kind of electronic tag and have a micro size chip in which information is stored so as to provide or trace information by a near field communication (NFC) using a 13.56 MHz band frequency, for example. The first NFC tag 121 may store only contents which are displayed by the corresponding learning content 111 as information or but is not limited thereto and may extend the contents which are displayed by the corresponding learning content 111 to store audio or an image as information.

As described above, when a terminal having an NFC communication unit which perform the NFC with the first NFC tag 121 approaches the learning content 111 to read the first NFC tag 121 corresponding to an approached learning content 111, information of the read first NFC tag 121 is output through an output unit of the terminal as an image or audio. Here, as the terminal, various electronic communication apparatuses such as a smart phone or a tablet PC which include an NFC communication unit and outputs information of the first NFC tag 121 through a display unit or a speaker to the outside by driving an application by a control unit may be used.

The content display unit 110 may include a function content 112 which controls to output information through the terminal. Further, the tag array unit 120 may include a second NFC tag 122 which stores control information corresponding to the function content 112. Accordingly, when the terminal approaches the function content 112 to read the second NFC tag 122 corresponding to the approached function content 112, an output of the terminal is controlled in accordance with control information of the second NFC tag 122.

In the content display unit 110, the leaning contents 111 may be configured by some of letters, numbers, and images required for the children to learn Korean characters, English, numbers, and mathematics and a combination thereof. Here, the letters are a concept including not only a syllable Korean character or an English word but also a consonant, a vowel, and alphabets.

In the content display unit 110, the function content 112 may be configured by some of a mathematical sign, an output instruction, and an output type or a combination thereof. Here, the mathematical sign is a sign which allows the control unit of the terminal to compute read information, for example, numbers and includes not only an addition (+) and subtraction (-) but also multiplication (X) and division (÷) of mathematics. The output instruction is a sign (an arrow) which allows the control unit of the terminal to instruct an output unit to output, for example, read, explain or continuously output the information. The output type allows the control unit of the terminal to control the output unit selectively to output actual pronunciation for the information as audio or output the information or an image for the corresponding information.

The learning content 111 and the function content 112 may be arranged up and down and left and right in a lattice pattern as described in the exemplary embodiment and thus the first and second NFC tags 121 and 122 may be arranged in a lattice pattern in the tag array unit 120.

Referring to FIG. 3, an extended content display unit 130 may be detachably attached on a front surface of the content display unit 110. The extended content display unit 130 may be provided such that a plurality of extended contents 131 which correspond to the learning contents 111 and are correlated with the corresponding learning contents 111 to be educationally extended is arranged on the front surface. For example, as described in the exemplary embodiment, when the learning content 111 is an initial sound of a specific Korean word, the extended content 131 may be a first alphabet of an English word corresponding to the specific Korean word and when the learning content 111 is an Arabic number, the extended content 131 is obtained by changing an Arabic number into letters, for example, Korean characters or Chinese characters.

The extended content display unit 130 includes function contents 132 which are compared with the function contents 112 of the content display unit 110 and the extended contents 131 and the function contents 132 may be provided on the sheet 133 such as a paper, a synthetic resin, or a fabric by a printed matter or a sticker. Further, the extended content display unit 130 may be detachably attached onto the front surface of the content display unit 110 through a detachable coupling unit 140 such as a Velcro tape, a double sided tape, a snap button, or a convex and concave coupling member.

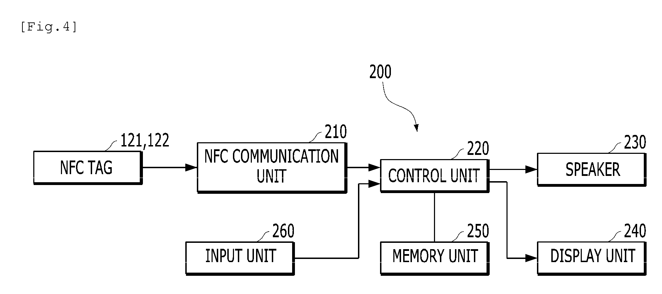

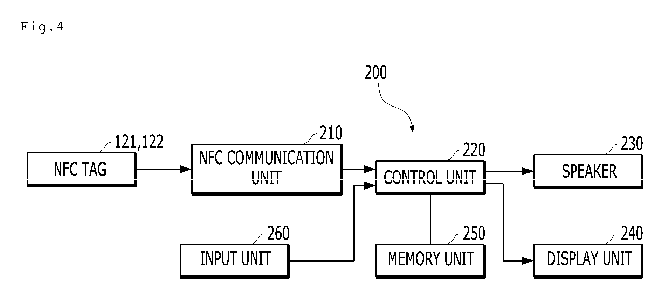

FIG. 4 is a diagram illustrating a learning system using a learning wall chart using NFC according to an exemplary embodiment of the present invention.

Referring to FIG. 4, a learning system 200 using a learning wall chart using NFC according to an exemplary embodiment of the present invention is a learning system which uses a learning wall chart 100 using NFC according to an exemplary embodiment of the present invention and includes an NFC communication unit 210 which performs near field wireless communication by NFC to read the first NFC tag 121, a control unit 220 which reads the information of the first NFC tag 121 through the NFC communication unit 210 to convert the information or corresponding information to be suitable for the output, and output units 230 and 240 which are controlled by the control unit 220 and outputs the information of the first NFC tag 121 or the corresponding information as an image or audio. The learning system 200 may be a terminal such as a smart phone or a tablet PC described in the learning wall chart 100 using NFC according to the exemplary embodiment of the present invention and thus the same part as described above will not be redundantly described. Further, a smart phone will be described as an example of the learning system 200 using the learning wall chart using NFC according to an exemplary embodiment of the present invention and the same reference numerals as the smart phone will be used.

When the NFC communication unit 210 reads the second NFC tag of the tag array unit 120 which stores control information corresponding to the function contents 112 to control output of information in the content display unit 110, the control unit 220 controls the output through the output units 230 and 240 in accordance with control information of the second NFC tag 122. Further, when the information of the first NFC tag 121 is read, the control unit 220 controls to read information corresponding to the information from the information stored in a memory unit 250 to output the information through the output units 230 and 240. That is, even though the information read from the first NFC tag 121 is basic information on the learning content 111, the control unit 220 outputs information which is set to match the basic information in advance and stored in the memory unit 250 through the output units 230 and 240. For example, when the information which is read from the first NFC tag 121 is simple information meaning " 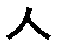 ", which is Korean alphabet, the control unit 220 outputs " 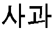 ", " 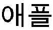 "(which are Korean characters which mean an apple), "apple" as information correlated with " 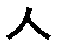 " stored in the memory unit 250. Further, the first NFC tag 121 may store information which is extended from a basic meaning of the learning content 111.

The output units 230 and 240 may be one or both of a speaker 230 which outputs actual pronunciation indicating a word or an image and a display unit 240 indicating an image or a word corresponding to the word or the image.

Further, the learning system 200 using a learning wall chart using NFC may further include a communication module which is configured by a communication apparatus such as a smart phone to perform communication and an input unit 260 for inputting information.

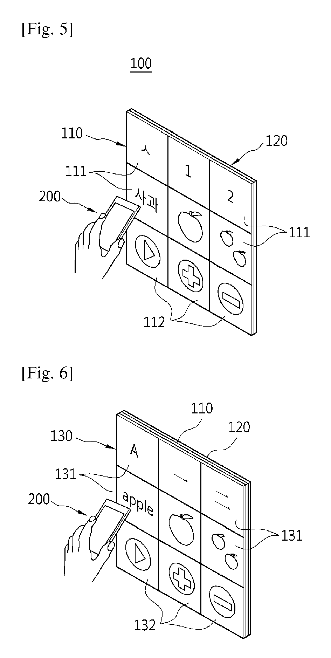

Referring to FIGS. 5 and 6, when the learning wall chart 200 using NFC, for example, a smart phone 200 in which an application is driven approaches the function contents 112, a specific function is set in the smart phone. When the specific function is an output instructing function, if the smart phone 200 approaches the learning content 111, corresponding contents such as sound, image, and information which correspond to a single content such as a word or a number included therein are displayed on a display unit 240 of the smart phone 200. For example, when characters " 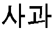 " are displayed as an image of an "apple" or the "image" of the apple is displayed as characters" 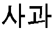 ".

To be more specific, when the corresponding second NFC tag 122 is read by approaching the smart phone 200 to the function contents 112, the control unit 220 is switched into a mode corresponding to an output instruction to read or explain information of the second NFC tag 122. Next, when the smart phone 200 approaches a desired learning content 111, corresponding information of the first NFC tag 121 is read to output letters, images, or a sound source related with the learning content 111 through the output units 230 and 240..

Further, when the smart phone 200 sequentially approaches two or more content display units 110, the control unit 220 generates an upper level content obtained by logically combining two or more content from two or more information read through an NFC communication unit 210 to output the upper level content through the output units 230 and 240.

For example, when the contents are " 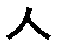 ", "+", " 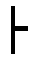 " " or " 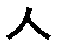 " and " 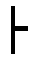 ", " 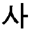 ⊦" is generated as an upper level content and
when the contents are "3", "+", and "2", "5" is generated as an upper level content.

When the smart phone 200 approaches the function content 112 so that control information of the second NFC tag 122 is a continuous output instruction (also referred to as a creation mode), the control unit 220 changes the smart phone 200 into the mode and then approaches the smart phone 200 to a first desired learning content 111 (for example, " 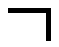 " or "1 "), an image or a sound source of the first learning content 111 is output through the output units 230 and 240. When the smart phone 200 approaches a second learning content 111 (" 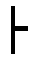 " or "2"), an image or a sound source of the second learning content 111 is output through the output units 230 and 240. Next, the control unit 220 may immediately output an image or a sound source (for example, " 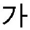 " or "3") of a content obtained by combining the first learning content 111 and the second learning content 111 through the output units 230 and 240.

Necessary information for output control functions by the function content 112 as described above is stored in the memory unit 250 of the smart phone 200, so that the control unit 220 extracts and outputs the information required for the function from the memory unit 250. Further, an operating function for computation of the learning content 111 is performed by the control unit 220.

Further, when the extended content display unit 130 is added to the content display unit 110, the extended content 131 which is displayed on the extended content display unit 130 is learned by the same method.

According to the learning wall chart using NFC and the learning system using the same according to the present invention, if there is just a terminal such as a smart phone, it is possible to induce children to instinctively understand and study letters and a concept by themselves while feeling interest in the letters and the concept and implement an interactive learning system at cheap price.

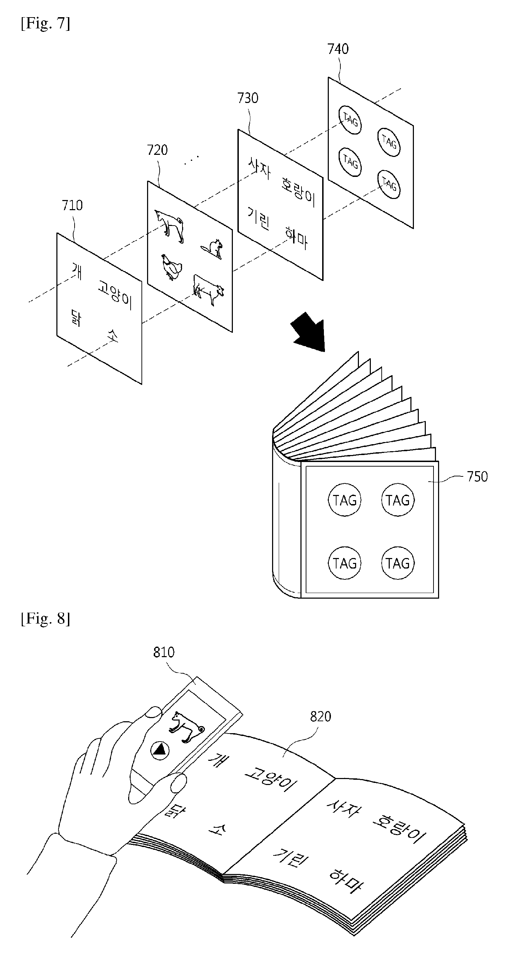

FIG. 7 illustrates an example of implementing the above described learning chart in the form of a book, and FIG. 8 illustrates a learning system including the book shown in FIG. 7 and a smart phone.

Referring to FIG. 7, a book 750 according to the present invention includes a plurality of inside pages (pages 1 to n) 710-730. Each of the plurality of inside pages 710-730 contains learning content printed thereon.

NFC tags corresponding to each of the plurality of inside pages 710-730 are attached on a cover 740. That is, a plurality of NFC tags attached on a cover 740 are located at the first or last page of the book 750. Here, it should be understood that the first or last page of the book 750 refers to a page which allows a user to easily move to a corresponding location without opening the book 750 at the corresponding location, and the first or last page may be used as the cover 740 of the book 750.

Each position of the NFC tags attached on the cover 740 correspond to the location of each page, For example, the NFC tag positioned in the upper-left corner may correspond to inside page 1, and the NFC tag positioned in the lower-right corner may correspond to inside page n.

In addition, referring to FIG. 8, a terminal 810 may approach one of a plurality of NFC tags in a book 820 so as to read information stored in the NFC tag and reproduce the contents for the page corresponding to the NFC tag. In FIG. 7, for example, one of four NFC tags attached on the cover may be the NFC tag corresponding to page 1. The terminal 810 may reproduce the contents for page 1 by reading the corresponding NFC tag.

Further, according to the present invention, a user can read an NFC tag without performing tagging of the terminal 810 directly on the cover in order to read the corresponding NFC tag. This is because a signal for transmitting/receiving information stored in an NFC tag can pass through a book. For example, while a user reads a page in the middle of a book, the terminal 810 may approach a specific position of the page so as to read the NFC tag corresponding to the specific position.

According to the learning wall chart using NFC and the learning system using the same according to the present invention, if there is just a terminal such as a smart phone, it is possible to induce children to instinctively understand and study letters and a concept by themselves while feeling interest in the letters and the concept and implement an interactive learning system at cheap price.

The present invention has been described with reference to the accompanying drawings, but the present invention may be changed or modified in various ways without being depart from the technical spirit of the present invention. Therefore, the scope of the present invention is not limited to the embodiments described, but should be defined by not only the claims to be described below and but also equivalents to the claims.

## Claims

1. A learning chart, comprising:
a content display unit in which a plurality of learning content is arranged on a front surface; and
a tag array unit, located in a rear surface of the content display unit, having a plurality of NFC (near field communication) tags respectively arranged on a location corresponding to the plurality of learning content, the plurality of tags being sequentially identified by a learning terminal, and a upper level content being created based on the sequentially identified tags.

2. The learning chart of claim 1, wherein the content display unit is capable of detachably attaching to a extended content display unit, wherein a content display on the extended content display unit related to the learning content arranged on the content display unit.

3. A learning terminal, comprising:
a NFC communication unit respectively identifying tag identifiers corresponding to a plurality of tags on a learning chart;
a control unit creating a upper level content based on the sequentially identified plurality of tag identifiers; and
a output unit outputting a output effect corresponding to the upper level content based on a combination of video and audio effect.

4. A learning terminal of claim 3, wherein the sequentially identified plurality of tag identifiers comprise the tag identifiers corresponding to a character configuring a word, and wherein the upper level content comprises a word corresponding to the combination of the character configuring a word.

5. A learning terminal of claim 3, wherein the sequentially identified plurality of tag identifiers comprises a learning content and a function content, a learning content comprising a least one of character, number and image and a function content comprising at least one of a mathematical sign, an output instruction and an output type,
and wherein the output unit output the output effect corresponding to the function content.

6. A learning terminal of claim 3, wherein the NFC communication unit identifies a tag identifier corresponding to the extended content display unit.

7. A book for use as a learning tool comprising:
inside pages containing one or more learning contents printed on the same position of each sheet of paper; and
an inside front or back page having at least one NFC tag attached thereon in a position corresponding to each inside page,
wherein when a terminal having an NFC communication unit for performing NFC with the at least one NFC tag approaches the learning contents of an inside page, an NFC tag corresponding to the approached learning contents is recognized and information of the NFC tag is output through an output unit of the terminal.

8. A learning system comprising:
a book including inside pages containing one or more learning contents printed on the same position of each sheet of paper, and an inside front or back page having at least one NFC tag attached thereon in a position corresponding to each inside page; and
a terminal including an NFC communication unit for performing NFC with the at least one NFC tag, and an output unit, wherein when the terminal approaches the learning contents of an inside page, an NFC tag corresponding to the approached learning contents is recognized and information of the NFC tag is output through the output unit.
